# EUROPEAN PATENT APPLICATION

(11) **EP 2 319 688 A1**
(43) Date of publication of application: **11.05.2011**
(21) Application number: 09175125.5
(22) Date of filing: 05.11.2009
(51) Int. Cl.: B32B 37/10, B44C 5/04, B32B 37/26

(54) **A method of manufacturing a laminated panel**

(71) Applicant: Spanolux N.V. - Div. Balterio, 8710 Sint-Baafs-Vijve (BE)
(72) Inventor: Vermeulen, Bruno Paul Louis, 3680 Aldeneik-Maaseik (BE)
(74) Representative: van Helden, Marinus

(57) **Abstract**

A method of manufacturing a laminated panel (2) comprises the steps of providing at least a base layer (6) and a top layer (8), positioning the top layer (8) over the base layer (6), providing a gloss-influencing layer (12) over the top layer (8), pressing a press plate (10) on the gloss-influencing layer (12) so as to form a laminated panel (2) of the base layer (6) and the top layer (8), separating the gloss-influencing layer (12) and the formed laminated panel (2). The gloss-influencing layer (12) has a smooth or nearly smooth surface for creating a predetermined gloss level on the top layer (8) during pressing.

## Description

The present invention relates to a method of manufacturing a laminated panel.

A conventional method of manufacturing a laminated panel, in particular a floor panel, comprises the step of pressing a set of layers onto each other at elevated temperature. At least a part of the layers is provided with a resin which results in adherence of the layers to each other after the pressing process. In practice an upper part of the laminated panel is provided with wear-resistant particles in order to obtain a certain wear-resistance of the panel. During pressing, the wear-resistant particles may slightly damage a press plate, for example due to a small local shift between the upper side of the laminated panel and the press plate. This may adversely affect the quality of the gloss level of the upper side of a next panel which is manufactured with the press plate.

The object of the invention is to provide a method of manufacturing a laminated panel which provides the possibility of combining a stable gloss level and a high wear resistance of formed laminated panels.

This is achieved by the method according to the invention which comprises the steps of providing at least a base layer and a top layer, positioning the top layer over the base layer, providing a gloss-influencing layer over the top layer, pressing a press plate on the gloss-influencing layer so as to form a laminated panel of the base layer and the top layer, separating the gloss-influencing layer and the formed laminated panel, wherein the gloss-influencing layer has a smooth or nearly smooth surface for creating a predetermined gloss level on the top layer during pressing.

This means that the top layer of the resulting laminated panel obtains a smooth or nearly smooth surface. The method provides the opportunity to create a high gloss level on the side of the top layer of the laminated panel. In case of wear-resistant particles being present in the upper part of the laminated panel, the presence of the gloss-influencing layer will minimize or even eliminate damage to the press plate during pressing. Of course, the gloss-influencing layer may be damaged, but once this layer adversely affects the gloss level quality of the laminated panel it may be easily replaced without the necessity of replacing or restoring the press plate. In practice, the gloss-influencing layer can be used a certain number of pressing cycles and then replaced by a fresh one. This is very advantageous in terms of costs.

In practice the surface of the gloss-influencing layer may have such a roughness that the gloss level lies between 30 and 100 gloss units. Within this range a visible variation between mat and high gloss can be created on the side of the top layer of the laminated panel. The gloss level can be measured by means of a gloss meter or reflectometer, for example according to DIN 67530 standard.

Preferably, the top layer comprises wear-resistant particles and the thickness of the gloss-influencing layer is greater than the size of the wear-resistant particles. This minimizes any damage of the wear-resistant particles to the press plate during pressing.

A decoration sheet including a decoration, pattern may be provided and positioned between the top layer and the base layer before pressing.

Alternatively the top layer may comprise a decoration sheet including a decoration pattern. In this case an overlay in addition to a decoration sheet as commonly applied in conventional laminated panels is eliminated which creates a greater transparency for visibility of the decoration pattern, hence providing the possibility of applying a higher number of wear-resistant particles which normally would decrease the transparency of the top layer. As a consequence, a relatively high gloss level in combination with a high wear resistance can be achieved. It is noted, that this situation can also be achieved in a manufacturing method without the use of the gloss-influencing layer but then the press plate has to be replaced or restored still earlier due to the increased number of wear-resistant particles.

The gloss-influencing layer may comprise a paper sheet having a thickness between 5 and 400 µm. This means that the gloss-influencing layer is still flexible.

The press plate may comprise an embossed surface. The gloss-influencing layer will follow the embossed surface during pressing such that the gloss level of the embossed surface of the laminated panel will be determined by the texture of the surface of the gloss-influencing layer.

The gloss-influencing layer may comprise regions of different gloss level, for example the laminated panel may be partly mat and partly high gloss. In case of manufacturing floor panels the gloss level between different planks can be varied, for example.

In a preferred embodiment the top layer comprises wear-resistant particles which have a flat shape. Due to this feature the wear effect on the gloss-influencing layer and/or the press plate during the pressing operation is minimized.

The invention will hereafter be elucidated with reference to the very schematic drawings showing an embodiment of the invention by way of example.
Fig. 1 is a side view of an embodiment of an apparatus for manufacturing a laminated panel, illustrating an embodiment of the method according to the invention.
Fig. 2 is a side view of a part of Fig. 1, illustrating successive pressing steps.

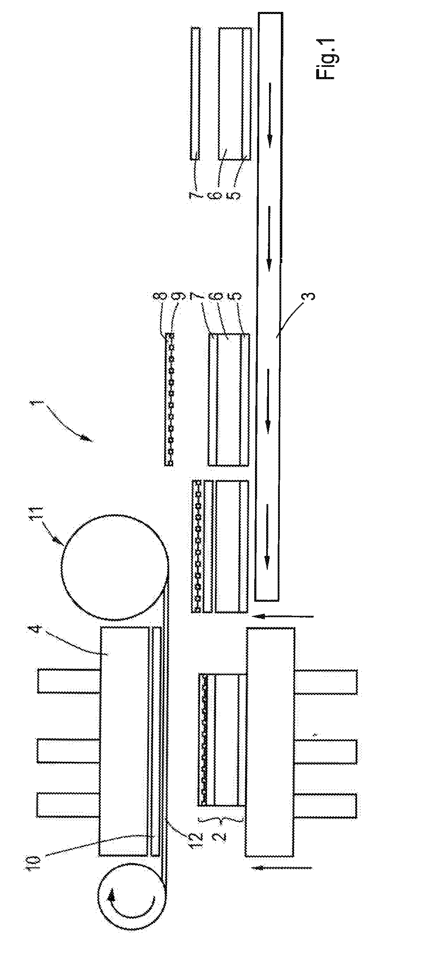

Fig. 1 illustrates an embodiment of an apparatus 1 for manufacturing a laminated panel 2 by an embodiment of the method according to the invention. The apparatus 1 comprises a conveyor 3 for transporting layers to be laminated to a press 4. The laminating process takes place in the press 4, which press 4 can be heated in order to melt any resin for mutual adherence of the layers. As shown at the right side of Fig. 1 a stack of layers is provided, in this case a balancing layer 5, a base layer 6 and a decoration layer 7. The layers 5-7 are positioned onto each other and onto the conveyor 3. The base layer 6 may be a wood-based layer such as HDF or the like. The decoration layer 7 comprises a decoration sheet including a decoration pattern.

At a downstream side of the conveyor 3 a top layer 8 is provided and positioned over the decoration layer 7. In this case the top layer 8 is a protective layer which comprises wear-particles 9, for example corundum particles. The top layer 8 further comprises a sheet which is impregnated with a resin. The wear-resistant particles 9 may be provided in the sheet and/or in the resin. Conventionally, the wear-resistant particles 9 are provided at a side of the top layer 8 facing the decoration layer 7 so as to protect the press 4 against damage of the wear-resistant particles 9 upon pressing.

After positioning the top layer 8 on the decoration layer 7, the entire stack of layers 5-8 is displaced to the press 4. The press 4 comprises a press plate 10 having a pressing surface facing to the top layer 8 when the stack of layers 5-8 is placed in the press 4. The pressing surface may be substantially smooth or embossed, for example for embossing-in-register.

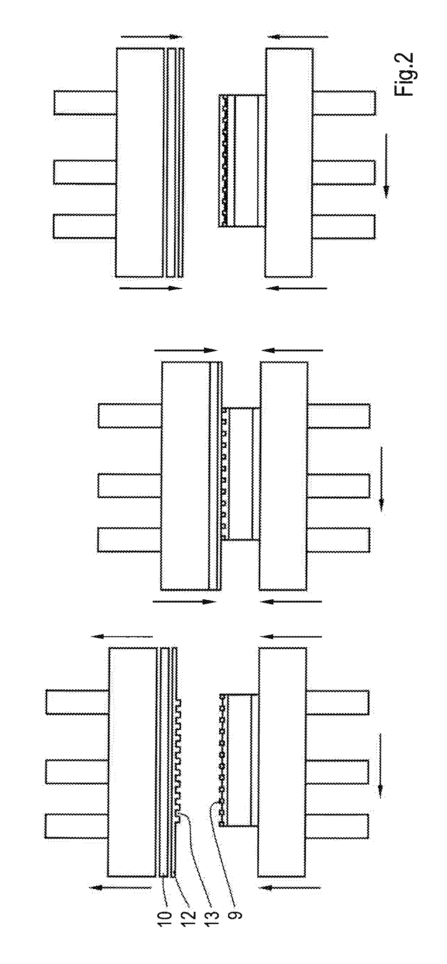

The apparatus 1 is also provided with a sheet supplying device 11 for supplying a gloss-influencing layer 12 to the press 4. The gloss-influencing layer 12 is disposed between the pressing surface of the press plate 10 and the top layer 8. On the one hand, the gloss-influencing layer 12 protects the press plate 10 against damage during pressing due to contact of the press plate 10 with the wear-resistant particles 9. The gloss-influencing layer 12 may be damaged during pressing, but the sheet supplying device 11 is provided with an unwinding mechanism for easily providing a fresh part of the gloss-influencing layer 12. This is more efficient than replacing the press plate 10. The effect of damaging the gloss-influencing layer 12 is illustrated in Fig. 2; the damage is illustrated by holes 13 in the gloss-influencing layer 12. On the other hand, the gloss-influencing layer 12 may be adapted for creating decorative effects on the laminated panel 2. The surface of the gloss-influencing layer 12 facing the top layer 8 may have such a roughness that the gloss level lies between 30 and 100 gloss units, as measured by means of a gloss meter or reflectometer, for example according to DIN 67530 standard. The roughness for creating the gloss effect is smaller than the roughness of the embossment relief of conventional laminated panels to imitate rough texture of natural materials such as wood grains.

After pressing, the press plate 10 including the gloss-influencing layer 12 and the stack of layers 5-8 are displaced with respect to each other so as to separate the gloss-influencing layer 12 and the formed laminated panel 2. In order to facilitate separation a release agent may be applied between the gloss-influencing layer 12 and the top layer 8 before pressing.

Regarding the function of the gloss-influencing layer 12 as a protective layer it is preferred that the thickness of the gloss-influencing layer 12 is greater than the size of the wear-resistant particles 9. In practice the gloss-influencing layer 12 may have a thickness between 5 and 400 µm. The gloss-influencing layer 12 may be made of paper, a plastic foil or the like, and should be heat conducting so as to be able to transfer heat from the press plate 10 to the stack of layers 5-8. The method according to the invention allows the use of larger wear-resistant particles 9 than in a conventional method without the use of the gloss-influencing layer 12. A further improvement can be achieved by applying wear-resistant particles 9 having a flat shape. This means that the length and/or width of a particle 9 is larger than its thickness. It appears that the application of this type of wear-resistant particles 9 have a reduced wearing effect on the gloss-influencing layer 12 and/or the press plate 10.

In an alternative embodiment of the method the decoration layer 7 is integrated in the top layer 8. In this case the top layer 8 comprises a decoration sheet and wear-resistant particles 9. The decoration sheet is provided with a decoration pattern and impregnated with a resin. The wear-resistant particles 9 may be provided in the resin and/or the decoration sheet. Since an additional overlay sheet is not present a higher transparency at the top layer side of the panel 2 is obtained, which improves the visibility of the decoration pattern. The increased transparency can be used for increasing the number of wear-resistant particles 9 in the top layer 8 which normally decreases the transparency. This means that compared to a panel including an additional overlay sheet a higher wear resistance at equal transparency can be achieved. Due to the protective function of the gloss-influencing layer 12 to the press plate 10, a panel having a high gloss level and a high wear resistance can be manufactured. The concentration of wear-resistant particles 9 may be higher than 40 g/m² of the panel surface. In case of applying wear-resistant particles 9 having a flat shape a still higher concentration may be allowable.

From the foregoing, it will be clear that the invention provides a method of manufacturing a laminated panel which provides the possibility of combining a stable gloss level and a high wear resistance of formed laminated panels. Furthermore, the method allows to manufacture a laminated panel which has a combination of a high gloss level and a high wear resistance.

The invention is not limited to the embodiments shown in the drawings and described hereinbefore, which may be varied in different manners within the scope of the claims and the technical equivalents. For example, the press plate may be a roller for pressing laminated panels continuously instead of intermittently.

## Claims

1. A method of manufacturing a laminated panel 1. (2), comprising the steps of:
providing at least a base layer (6) and a top layer (8),
positioning the top layer (8) over the base layer (6),
providing a gloss-influencing layer (12) over the top layer (8),
pressing a press plate (10) on the gloss-influencing layer (12) so as to form a laminated panel (2) of the base layer (6) and the top layer (8),
separating the gloss-influencing layer (12) and the formed laminated panel (2),
wherein the gloss-influencing layer (12) has a smooth or nearly smooth surface for creating a predetermined gloss level on the top layer (8) during pressing.

2. A method according to claim 1, wherein the surface of the gloss-influencing layer (12) has such a roughness that the gloss level lies between 30 and 100 gloss units.

3. A method according to claim 1 or 2, wherein the top layer (8) comprises wear-resistant particles (9) and the thickness of the gloss-influencing layer (12) is greater than the size of the wear-resistant particles (9).

4. A method according to one of the claims 1-3, wherein a decoration sheet (7) including a decoration pattern is provided and positioned between the top layer (8) and the base layer (6) before pressing.

5. A method according to one of the claims 1-3, wherein the top layer (8) comprises a decoration sheet (7) including a decoration pattern.

6. A method according to one of the preceding claims, wherein the gloss-influencing layer (12) comprises a paper sheet having a thickness between 5 and 400 µm.

7. A method according to one of the preceding claims, wherein the press plate (10) comprises an embossed surface.

8. A method according to one of the preceding claims, wherein the gloss-influencing layer (12) comprises regions of different gloss level.

9. A method according to one of the preceding claims, wherein the top layer (8) comprises wear-resistant particles (9) having a flat shape.
